**Europäisches Patentamt**

**European Patent Office**

**Office européen des brevets**

(19)

(11) Veröffentlichungsnummer: **0 209 017**
**B1**

(12) # EUROPÄISCHE PATENTSCHRIFT

(45) Veröffentlichungstag der Patentschrift:
31.08.88

(21) Anmeldenummer: **86109156.9**

(22) Anmeldetag: **04.07.86**

(51) Int. Cl.⁴: **B 65 G 49/00,** D 06 F 95/00

(54) Transporteinrichtung für auf Kleiderbügeln hängende Kleidungsstücke.

(30) Priorität: **06.07.85 DE 3524221**

(43) Veröffentlichungstag der Anmeldung:
**21.01.87 Patentblatt 87/4**

(45) Bekanntmachung des Hinweises auf die Patenterteilung:
**31.08.88 Patentblatt 88/35**

(84) Benannte Vertragsstaaten:
**FR GB IT SE**

(56) Entgegenhaltungen:
**BE-A-835 127**
**DD-C-116 439**
**DE-B-2 836 750**
**DE-C-1 118 700**
**DE-U-7 041 979**
**DE-U-7 715 547**
**GB-A-2 079 708**

(73) Patentinhaber: **Götz, Peter, Dorfstrasse 81, D-7470 Albstadt 14- Margrethausen (DE)**

(72) Erfinder: **Götz, Peter, Dorfstrasse 81, D-7470 Albstadt 14- Margrethausen (DE)**
Erfinder: **Götz, Franz, Dorfstrasse 81, D-7470 Albstadt 14- Margrethausen (DE)**

(74) Vertreter: **Möbus, Rudolf, Dipl.- Ing., Hindenburgstrasse 65, D-7410 Reutlingen (DE)**

## Beschreibung

Die Erfindung betrifft eine Transporteinrichtung für auf Kleiderbügeln hängende Kleidungsstücke mit an einer Transportkette angebrachten Kleiderträgern, mit einer Station zur Aufnahme leerer Kleiderbügel in die Kleiderträger, mit einer Station zum Aufziehen der Kleidungsstücke auf die mit Kleiderbügeln besetzten Kleiderträger und mit einer Station zur Entnahme der mit Kleidungsstücken besetzten Kleiderbügel.

Transporteinrichtungen der vorstehend genannten Art werden insbesondere in Verbindung mit Einrichtungen zur Ausrüstung von Kleidungsstücken verwendet, wobei die auf die Kleiderträger aufgezogenen Kleidungsstücke eine oder mehrere Ausrüstungsstationen, beispielsweise eine Station zur Dampfbehandlung, durchlaufen.

Der Erfindung liegt die Aufgabe zugrunde, solche Transporteinrichtungen so auszubilden, daß an der Kleiderbügel-Aufnahmestation und an der Kleiderbügel-Entnahmestation keine Bedienungspersonen mehr erforderlich sind.

Die gestellte Aufgabe wird bei einer Transporteinrichtung der eingangs genannten Art erfindungsgemäß dadurch gelöst, daß zum vollautomatischen Betrieb der Kleiderbügel-Aufnahmestation und der Kleiderbügel-Entnahmestation die Kleiderträger mit einem Kleiderbügelhalter versehen sind, der zwei Haltebacken zum Erfassen der Kleiderbügel im Hakenbereich aufweist, von denen mindestens eine Backe am Kleiderträger gegen Federkraft verstellbar ist, und daß sowohl an der Kleiderbügel-Aufnahmestation als auch an der Kleiderbügel-Entnahmestation eine Verstellbewegung des Kleiderbügels und ein vorübergehendes Öffnen der Kleiderbügelhalter bewirkende Organe angeordnet sind.

Bei einer erfindungsgemäß ausgebildeten Transporteinrichtung erfolgt also an der Kleiderbügel-Aufnahmestation eine vollautomatische Aufnahme eines Kleiderbügels in jeden Kleiderträger der Transporteinrichtung, und an der Kleiderbügel-Entnahmestation werden die Kleiderbügel zusammen mit den aufgezogenen Kleidern vollautomatisch ohne Bedienungspersonen wieder aus den Kleiderträgern entfernt. Hierzu sind neben der besonderen Gestaltung der Kleiderträger mit einem besonderen Kleiderbügelhalter die Schalteinrichtungen und die Kleiderbügel verstellende Organe an den beiden Stationen der Transporteinrichtung vorgesehen.

Vorteilhafterweise kann von den beiden Haltebacken des Kleiderbügelhalters mindestens einer verschwenkbar gelagert sein, dergestalt, daß er beim Verschwenken einen sich scherenartig nach oben öffnenden Aufnahmespalt für einen Kleiderbügel freigibt. Dabei kann das Öffnen des Kleiderbügelhalters entweder durch eine auf einen Haltebacken des Kleiderbügelhalters einwirkende Schalteinrichtung oder aber durch am gefaßten Kleiderbügel ansetzende Kräfte erfolgen. Hierzu können die beiden Haltebacken des Kleiderbügelhalters zweckmäßig einen Aufnahmeraum für den Kleiderbügelkörper begrenzen und in ausgeprägten Halteköpfen enden, von denen der stationäre eine vertikale Aufnahmenut für den Stiel des über die Halteköpfe frei hinausragenden Hakens der Kleiderbügel und der verschwenkbare eine in die Aufnahmenut eingreifende Druckleiste, die zum Aufnahmeraum hin in eine Schrägfläche übergeht, aufweist. Außerdem kann vorteilhafterweise die verschwenkbare Haltebacke des Kleiderbügelhalters den einen Arm eines zweiarmigen Hebels bilden, an dessen anderem Arm eine in einer Richtung gegen Federkraft am Kleiderträger längsverstellbare Stange angelenkt ist, deren freies Ende eine Schaltrolle trägt, die auf eine Führungsbahn in der Kleiderbügel-Aufnahmestation auflaufen kann. Zur Entnahme der mit Kleiderstücken besetzten Kleiderbügel aus den Kleiderträgern können die Kleiderbügel an den freiliegenden Haken der Kleiderbügel in der Kleiderbügel-Entnahmestation von den Organen einer anderen Transporteinrichtung erfaßt und zu einer weiteren Behandlungsstation oder einer Verpackungsstelle oder Stapelstelle weiterbewegt werden. Es genügt eine einzige Bedienungsperson an der Transporteinrichtung, die an der Station zum Aufziehen der Kleidungsstücke auf die Kleiderträger das Aufziehen der Kleiderstücke, die unterschiedliche Abmessungen haben können, besorgt oder überwacht.

Nachfolgend wird ein Ausführungsbeispiel einer erfindungsgemäß ausgebildeten Transporteinrichtung anhand der beiliegenden Zeichnung näher erläutert.

Im einzelnen zeigen:

Fig. 1 eine schematische Übersichtsdarstellung der Transporteinrichtung und ihrer Behandlungsstationen;

Fig. 2 eine Seitenansicht der Kleiderbügel-Aufnahmestation der Transporteinrichtung;

Fig. 3 eine Draufsicht auf einen der Kleiderträger der Transporteinrichtung;

Fig. 4 eine gegenüber Fig. 2 vergrößerte Seitenansicht eines Kleiderträgers der Transporteinrichtung mit dem geöffneten Kleiderbügelhalter an der Kleiderbügel-Aufnahmestation;

Fig. 5 eine der Fig. 4 entsprechende Seitenansicht eines Kleiderträgers mit geschlossenem und gefüllten Kleiderbügelhalter;

Fig. 6 eine der Fig. 4 entsprechende Teilseitenansicht eines Kleiderträgers mit sich öffnendem Kleiderbügelhalter im Bereich der Kleiderbügel-Entnahmestation;

Fig. 7 eine schematische Darstellung der Kleiderbügel-Entnahmestation der Transporteinrichtung.

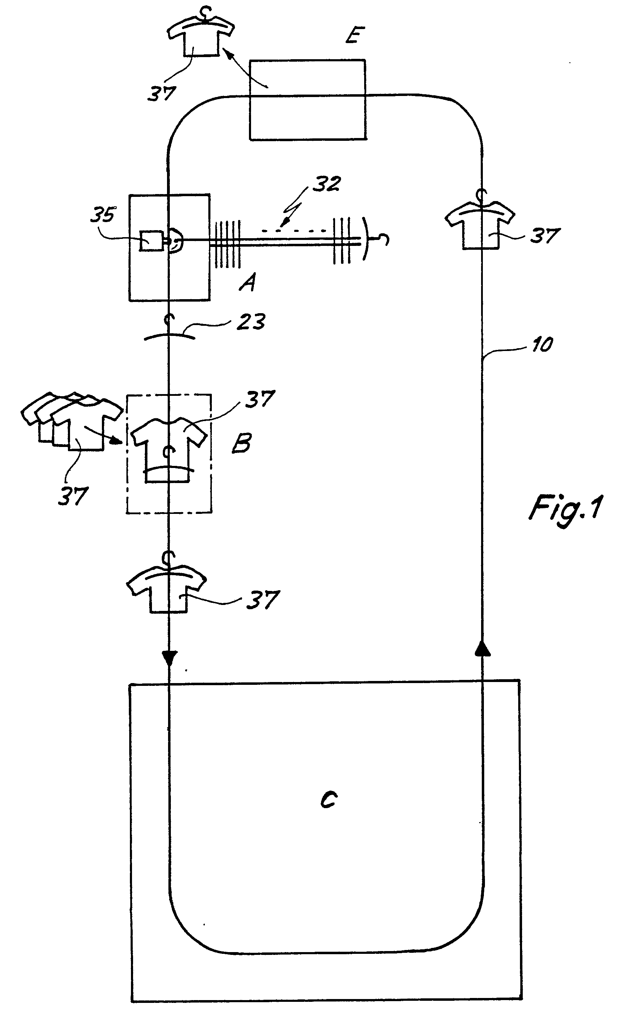

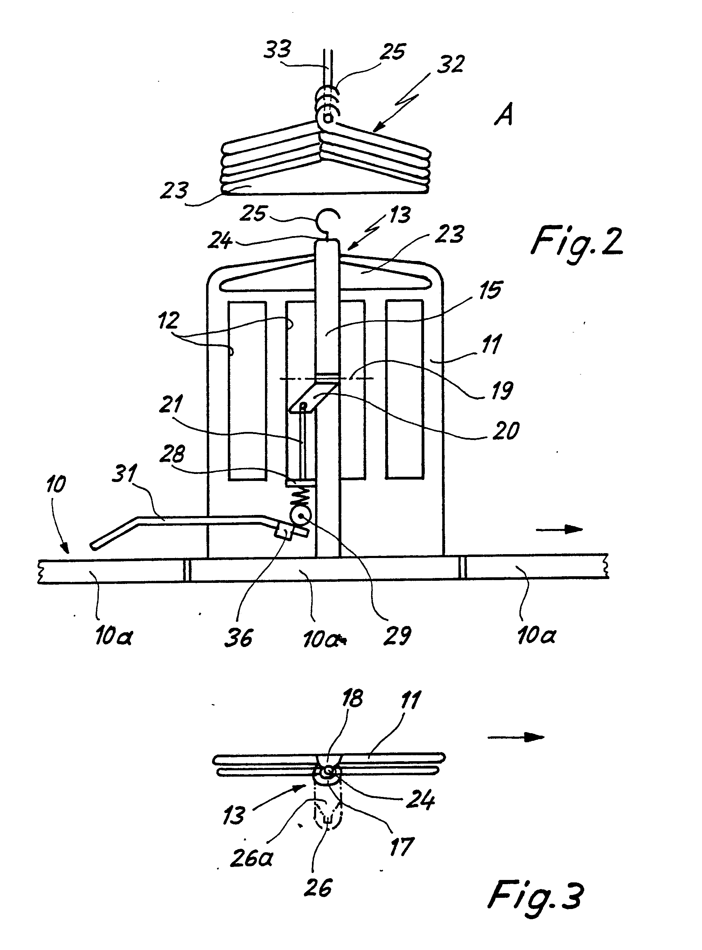

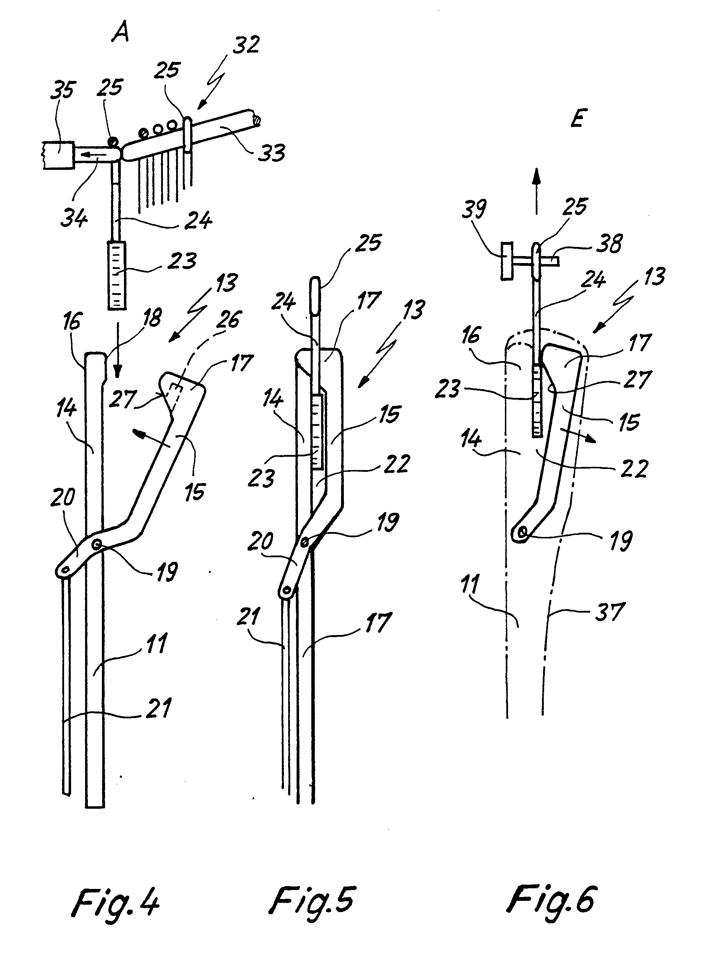

In der schematischen Übersichtsdarstellung der Fig. 1 ist eine endlose Transportkette 10 eingezeichnet, die an mehrreren Stationen vorbeiführt, von denen eine Kleiderbügel-Aufnahmestation A, eine Station B zum Aufziehen der Kleidungsstücke auf Kleiderträger, eine Kleiderbehandlungsstation C und eine Kleiderbügel-Entnahmestation E angedeutet sind. Die Transportkette 10 ist gemäß Fig. 2 in einzelne, gelenkig miteinander verbundene Kettenglieder 10a unterteilt. Auf jedem Kettenglied 10a ist ein Kleiderträger 11 in Form eines vertikalen, mit Durchbrüchen 12 versehenen Spannrahmens angeordnet. Der Kleiderträger 11 kann in seiner Breite verstellbar ausgebildet und auswechselbar angeordnet sein, was hier nicht interessiert. Am oberen Ende jedes Kleiderträgers 11 ist auf einer Seite in der Mitte ein aus den Fig. 2 - 6 ersichtlicher Kleiderbügelhalter 13 angeordnet, der aus zwei miteinander zusammenwirkenden Haltebacken 14 und 15 besteht, die beide in oberen Halteköpfen 16 und 17 enden. Beim dargestellten Ausführungsbeispiel ist die eine Haltebacke 14 stationär am Kleiderträger 11 ausgebildet und weist an seinem Haltekopf 16 eine vertikale Druckleiste 18 auf. Die andere Haltebacke 15 ist der eine Arm eines um eine Achse 19 am Kleiderträger 11 verschwenkbar gelagerten doppelarmigen Hebels, an dessen anderem Arm 20 eine Schaltstange 21 angelenkt ist. Die beiden Haltebacken 14 und 15 begrenzen zusammen einen aus Fig. 5 ersichtlichen Aufnahmeraum 22 für den Körper eines Kleiderbügels 23. Verwendung finden flache Kunststoff-Kleiderbügel 23 mit einem aus Metalldraht gefertigten, auf einem Stiel 24 sitzenden Haken 25.

Der Haltekopf 17 der verschwenkbaren Haltebacke 15 ist mit einer vertikalen Aufnahmenut 26 für den Stiel 24 der Kleiderhaken 25 versehen. Gemäß Fig. 3 weist diese Aufnahmenut 26 vom Nutgrund ausgehend über die Höhe der Stärke des Stieles 24 des Hakens 25 eines Kleiderbügels 23 parallel zueinander verlaufende Seitenwände auf und ist dann zu einem Trichter 26a erweitert. In die trichterförmige Erweiterung 26a ragt bei geschlossenem Kleiderbügelhalter 13 die vertikale Druckleiste 18 der stationären Haltebacke 14, so daß der Stiel 24 im geschlossenen Kleiderbügelhalter 13 festgeklemmt ist. Der Haltekopf 17 der Haltebacke 15 weist eine innere Schrägfläche 27 auf, die aus den Fig. 4 - 6 ersichtlich ist.

Die am zweiten Arm 20 der beweglichen Haltebacke 15 angelenkte Schaltstange 21 ist gemäß Fig. 2 in einem Lagerauge 28 des Kleiderträgers 11 längsverschiebbar gelagert und endet in einer Laufrolle 29. Die Längsbewegung der Schaltstange 21 erfolgt in einer Richtung gegen die Kraft einer Rückstellfeder 30, die zwischen dem Lagerauge 28 und dem Lager der Laufrolle 29 eingespannt ist.

Die Fig. 2 und 4 zeigen einen Kleiderträger 11 und seinen Kleiderbügelhalter 13 an der Kleiderbügel-Aufnahmestation A der Transporteinrichtung. Dort ist eine stationäre Führungsbahn 31 ausgebildet, auf welche die Laufrolle 29 aufläuft und dadurch die verschwenkbare Haltebacke 15 in die aus Fig. 4 ersichtliche Offenstellung bringt. An der Kleiderbügel-Aufnahmestation A ist oberhalb der Kleiderträger 11 ein Kleiderbügelmagazin 32 angeordnet. Das Magazin weist einen Schrägstab 33 auf, auf welchem die Kleiderbügel 23 gegeneinanderliegend aufgereiht sind und mit ihren Haken 25 hängen. Der jeweils unterste Kleiderbügel 23 liegt mit seinem Haken 25 auf einem aus Fig. 4 ersichtlichen längsverstellbaren Schaltbolzen 34 auf, der mit dem Anker eines Elektromagneten 35 oder mit einer anderen Antriebsvorrichtung verbunden ist. Der Elektromagnet 35 wird durch einen an der Führungsbahn 31 angeordneten, in Fig. 2 eingezeichneten Schalter 36 beträgt der von der Laufrolle 29 des Kleiderträgers 11 beaufschlagt wird. Wenn die Laufrolle 29 den Schalter 36 beaufschlagt, wird der Schaltbolzen 34 zurückgezogen, so daß der auf ihm hängende einzelne Kleiderbügel 23 freigegeben wird und in den noch offenen Kleiderbügelhalter bei sich bereits in Schließbewegung befindlicher Haltebacke 15 einfällt. Der eingefallene Kleiderbügel 23 wird dann an seinem Stiel 24 zwischen den Halteköpfen 16 und 17 der beiden Haltebacken 14 und 15 eingeklemmt.

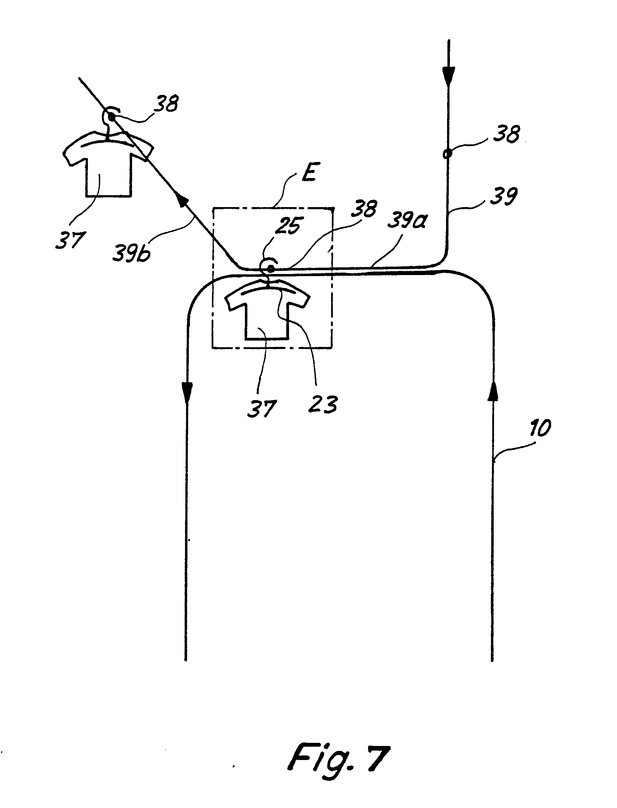

Auf die in der Kleiderbügel-Aufnahmestation A mit Kleiderbügeln 23 besetzten Kleiderträger 12 werden an der nachfolgenden Station B in der nachfolgenden Station C zu behandelnde Kleidungsstücke 37 einzeln aufgezogen. In Fig. 6 ist ein solches aufgezogenes Kleidungsstück 37 mit einer strichpunktierten Linie angedeutet. An der Kleiderbügel-Entnahmestation E werden die Kleiderbügel 23 zusammen mit den aufgezogenen Kleidungsstücken 37 von den Kleiderträgern 11 abgezogen. Hierzu werden gemäß Fig. 6 und 7 Tragbolzen 38 verwendet, wie auf Gliedern einer zweiten Transportkette 39 mit größerem gegenseitigen Abstand voneinander angeordnet sind. Die zweite Transportkette 39 läuft über einen ersten Bereich 39a parallel zur die Kleiderträger 11 tragenden Förderkette 10, und in einem anschließenden Abschnitt 39b von der Förderkette 10 weg schräg nach oben. Die zweite Förderkette 39 wird schneller bewegt, beispielsweise mit der doppelten Geschwindigkeit, als die Förderkette 10. Der gegenseitige Abstand der Tragbolzen 38 und die Laufgeschwindigkeit der Transportkette 39 sind auf die Geschwindigkeit der Transportkette 10 und die gegenseitigen Abstände der Kleiderträger 11 so abgestimmt, daß in der Entnahmestation E immer nur ein Kleiderträger 11 gleichzeitig erfaßt wird. Der Tragbolzen 38 läuft dabei gemäß Fig. 6 in den Haken 25 des Kleiderbügels 23 ein und zieht beim Abgang nach oben auf der Förderstrecke 39b den Kleiderbügel 23 aus dem Kleiderbügelhalter 13. Gemäß Fig. 6 gleitet dabei der Körper des Kleiderbügels 23 auf die Schrägfläche 27 der Haltebacke 15 auf, wodurch diese Haltebacke gegen die Kraft der Rückstellfeder 30 geöffnet wird. Mit dem Kleiderbügel 23 wird auch das über den Kleiderträger 11 gezogene Kleidungsstück 37 vom Kleiderträger 11 nach oben abgezogen und mittels der Transportkette 39 fortbewegt.

**Patentansprüche**

1. Transporteinrichtung für auf Kleiderbügeln (23) hängende Kleidungsstück (37), mit an einer Transportkette (10) angebrachten Kleiderträgern (11), mit einer Station (A) zur Aufnahme leerer Kleiderbügel (27) in die Kleiderträger (11), mit einer Station (B) zum Aufziehen der Kleidungsstücke auf die mit Kleiderbügeln besetzten Kleiderträger und mit einer Station (E) zur Entnahme der mit Kleidungsstücken besetzten Kleiderbügel, dadurch gekennzeichnet, daß zum vollautomatischen Betrieb der Kleiderbügel-Aufnahmestation (A) und Kleiderbügel-Entnahmestation (E) die Kleiderträger (11) mit einem Kleiderbügelhalter (13) versehen sind, der zwei Haltebacken (14, 15) zum Erfassen der Kleiderbügel (23) im Hakenbereich aufweist, von denen mindestens eine Haltebacke (15) am Kleiderträger (11) gegen Federkraft verstellbar ist, und daß sowohl an der Kleiderbügel-Aufnahmestation (A) als auch an der Kleiderbügel-Entnahmestation (E) eine Verstellbewegung des Kleiderbügels (23) und ein vorübergehendes Öffnen der Kleiderbügelhalter (13) bewirkende Organe (34, 38) angeordnet sind.

2. Transporteinrichtung nach Anspruch 1, dadurch gekennzeichnet, daß von den beiden Haltebacken (14, 15) des Kleiderbügelhalters (13) mindestens einer verschwenkbar gelagert ist, dergestalt, daß er beim Verschwenken einen sich scherenartig nach oben öffnenden Aufnahmespalt für einen Kleiderbügel (23) freigibt.

3. Transporteinrichtung nach Anspruch 1 und 2, dadurch gekennzeichnet, daß die beiden Haltebacken (14, 15) des Kleiderbügelhalters (13) einen Aufnahmeraum (22) für den Kleiderbügelkörper (23) begrenzen und in ausgeprägten Halteköpfen (16, 17) enden, von denen der bewegliche (17) eine vertikale Aufnahmenut (26) für den Stiel (24) des über die Halteköpfe (16, 17) frei hinausragenden Hakens (25) der Kleiderbügel (23) und der stationäre Haltekopf (16) eine in die Aufnahmenut (26) eingreifende Druckleiste (18) aufweist oder umgekehrt, und daß der Haltekopf (17) der beweglichen Haltebacke (15) zum Aufnahmeraum (22) hin in eine Schrägfläche (27) übergeht.

4. Transporteinrichtung nach einem der Ansprüche 1 bis 3, dadurch gekennzeichnet, daß die vertikale Aufnahmenut (26) des verschwenkbaren Halteköpfes (17) vom Nutgrund ausgehend über eine der Kleiderhakenstielstärke entsprechende Höhe parallele und anschließend schräg nach außen verlaufende Nutseitenwände (Trichterbereich 26a) aufweist.

5. Transporteinrichtung nach einem der Ansprüche 1 bis 4, dadurch gekennzeichnet, daß die verschwenkbare Haltebacke (15) des Kleiderbügelhalters (13) den einen Arm eines zweiarmigen Hebels bildet, an dessen anderem Arm (20) eine in einer Richtung gegen Federkraft am Kleiderträger (11) längsverstellbare Stange (21) angelenkt ist, deren freies Ende eine Schaltrolle (29) aufweist.

6. Transporteinrichtung nach einem der Ansprüche 1 bis 5, dadurch gekennzeichnet, daß an der Kleiderbügel-Aufnahmestation (A) oberhalb der bewegbaren Kleiderträger (11) ein Kleiderbügelmagazin (32) angeordnet ist, in welchem die Kleiderbügel (23) in bekannter Weise mit ihren Haken (25) auf einem Schrägstab (33) hängen, und daß das eine Kleiderbügel-Verstellbewegung bewirkende Organ der Kleiderbügel-Aufnahmestation (A) ein in Abhängigkeit von der Stellung eines Kleiderträgers (11) verstellbarer Schaltbolzen (34) im Kleiderbügelmagazin (32) zur Freigabe eines Kleiderbügels (23) zum freien Einfallen in den geöffneten Kleiderbügelhalter (13) des Kleiderträgers (11) ist.

7. Transporteinrichtung nach Anspruch 6, dadurch gekennzeichnet, daß der Schaltbolzen (34) mittels eines Schalters (36) betätigbar ist, der in der Führungsbahn (31) für die Schaltrolle (29) der Kleiderträger (11) angeordnet und von ihr beaufschlagt ist.

8. Transporteinrichtung nach einem der Ansprüche 1 bis 7, dadurch gekennzeichnet, daß die die Kleiderbügel-Verstellbewegung bewirkenden Organe der Kleiderbügel-Entnahmestation (E) oberhalb der Kleiderbügelhalter (13) der Kleiderträger (11) schneller als die Kleiderträger (11) bewegte, in die Haken (25) der Kleiderbügel (23) eingreifende Tragbolzen (38) sind.

9. Transporteinrichtung nach Anspruch 8, dadurch gekennzeichnet, daß die Tragbolzen (38) in Abständen auf einer Transportkette (39) angeordnet sind, die kurzstreckig parallel zur Transportkette (10) für die Kleiderträger (11) und anschließend schräg nach oben weg verläuft, dergestalt, daß die an den Haken (25) angreifenden Tragbolzen (38) die Kleiderbügel (23) mit dem Kleidungsstück (37) aus den Kleiderträgern (11) unter Öffnen des Kleiderbügelhalters (13) durch Auflaufen des Kleiderbügelkörpers (23) auf die Schrägfläche (27) der beweglichen Haltebacke (15) ziehen.

**Claims**

1. A conveying device for articles of clothing (37) hanging on clothes-hangers (23), comprising clothing carriers (11) fitted on a conveyor chain (10), a station (A) for the reception of empty clothes-hangers (23) into the clothing carriers (11), a station (B) for drawing the articles of clothing onto the clothing carriers occupied by clothes-hangers, and a station (E) for removing the clothes-hangers occupied by articles of clothing, characterised in that, for the fully-automatic operation of the clothes-hanger reception station (A) and clothes-hanger removal station (E), the clothing carriers (11) are provided with a clothes-hanger holder (13) which has two retaining jaws (14, 15) for grasping the clothes-hangers (23) in their hook region, of which at least one retaining jaw (15) is adjustable against spring force on the clothing carrier (11), and in that members (34, 38) which bring about a displacement of the clothes-hanger (23) and a temporary opening of the clothes-hanger holder (13) are arranged both at the clothes-hanger reception station (A) and at the clothes-hanger removal station (E).

2. A conveying device according to claim 1, characterised in that at least one of the two retaining jaws (14, 15) of the clothes-hanger holder (13) is mounted so as to be able to swivel, in such a way that upon the swivelling it frees a reception gap, opening upwardly like shears, for a clothes-hanger (23).

3. A conveying device according to claim 1 and 2, characterised in that the two retaining jaws (14, 15) of the clothes-hanger holder (13) define a reception space (22) for the clothes-hanger body (23) and end in prominent retaining heads (16, 17), of which the movable retaining head (17) has a vertical reception groove (26) for the stem (24) of the hook (25), projecting freely beyond the retaining heads (16, 17), of the clothes-hangers (23) and the stationary retaining head (16) has a pressure strip (18) engaging into the reception groove (26), or vice versa, and in that towards the reception space (22) the retaining head (17) of the movable retaining jaw (15) merges into an inclined plane (27).

4. A conveying device according to any one of claims 1 to 3, characterised in that the vertical reception groove (26) of the swivelling retaining head (17) has, emanating from the groove bottom, groove side walls clothes-hook stem thickness and which then extend obliquely outwards (region 26a).

5. A conveying device according to any one of claims 1 to 4, characterised in that the swivelling retaining jaw (15) of the clothes-hanger holder (13) forms one arm of a two-armed lever, to the other arm (20) of which is hinged a rod (21) which is longitudinally displaceable in one direction against spring force on the clothing carrier (11) and the free end of which has a switching roller (29).

6. A conveying device according to any one of claims 1 to 5, characterised in that arranged at the clothes-hanger reception station (A) above the mobile clothing carriers (11) is a clothes-hanger magazine (32) in which the clothes-hanger (23) hang in known manner by their hooks (25) on a sloping rod (33), and in that that member of the clothes-hanger reception station (A) which brings about a displacement of the clothes-hanger is a switching pin (34), adjustable as a function of the position of a clothing carrier (11), in the clothes-hanger magazine (32) for the release of a clothes-hanger (23) for the free fall into the opened clothes-hanger holder (13) of the clothing carrier (11).

7. A conveying device according to claim 6, characterised in that the switching pin (34) is actuable by means of a switch (36) which is arranged in the guideway (31) for the switching roller (29) of the clothing carriers (11) and can be acted upon by it.

8. A conveying device according to any one of claims 1 to 7, characterised in that the members of the clothes-hanger removal station (E) which bring about the displacement of the clothes-hanger are conveying pins (38) which are moved above the clothes-hanger holders (13) of the clothing carriers (11) faster than the clothing carriers (11) and which engage into the hooks (25) of the clothes-hangers (23).

9. A conveying device according to claim 8, characterised in that the carrying pins (3) are arranged at intervals on a conveyor chain (39) which extends for a short stretch parallel to the conveyor chain (10) for the clothing carriers (11) and then extends away obliquely upwards, in such a way that the carrying pins (38) acting on the hooks (25) draw the clothes-hangers (23) with the article of clothing (37) out of the clothing carriers (11) along with opening of the clothes-hanger holder (13) by run-up of the clothes-hanger body (23) onto the inclined plane (27) of the movable retaining jaw (15).

## Revendications

1. Dispositif de transport pour vêtements (37) suspendus à des cintres (23), avec des porte-vêtements (11) disposés sur une chaîne de transport (10), avec une station (A) pour recevoir des cintres vides (23) dans les porte-vêtements (11), avec une station (B) pour enfiler les vêtements sur les porte-vêtements munis de cintres, et avec une station (E) pour retirer les cintres supportant des vêtements, caractérisé en ce que, pour permettre une exploitation entièrement automatique de la station de réception des cintres (A) et de la station de retrait des cintres (E), les porte-vêtements (11) sont munis d'un porte-cintres (13) qui comporte deux mâchoires de retenue (14, 15) pour prendre les cintres (23) au niveau du crochet, au moins une de ces mâchoires de retenue (15) pouvant être déplacée sur le porte-vêtements (11) à l'encontre d'une force élastique, et en ce qu'à la station de réception des cintres (A) comme à la station de retrait des cintres (E), sont disposés des organes (34, 38) produisant un déplacement de réglage du cintre (23) et une ouverture temporaire des porte-cintres (13).

2. Dispositif de transport conforme à la revendication 1, caractérisé en ce qu'au moins l'une des deux mâchoires de retenue (14, 15) du porte-cintres (13) est montée de manière pivotante, de façon qu'en pivotant, elle forme, pour un cintre (23), un intervalle de réception s'ouvrant vers le haut à la manière de ciseaux.

3. Dispositif de transport conforme à la revendication 1 et 2, caractérisé en ce que les deux mâchoires de retenue (14, 15) du porte-cintres (13) délimitent un espace de réception (22) d'un corps de cintre (23) et se terminent par des têtes de retenue saillantes (16, 17), parmi lesquelles la tête de retenue mobile (17) comporte une gorge verticale de réception (26) de la tige (24) du crochet (25) des cintres (23) dépassant librement au-dessus des têtes de retenue (16, 17), et la tête de retenue fixe (16) comporte un rebord de pression (18) qui s'engage dans la gorge de réception (26), et en ce que la tête de retenue (17) de la mâchoire de retenue mobile (15) se prolonge, en direction de l'espace de réception (22) par une surface inclinée (27).

4. Dispositif de transport conforme à l'une des revendications 1 à 3, caractérisé en ce que la gorge de réception verticale (26) de la tête de retenue pivotante (17) comporte des parois latérales de gorge (zone en entonnoir 26a) qui partent du fond de la gorge et qui s'étendent de manière parallèle, sur une hauteur correspondant à l'épaisseur de la tige du crochet du cintre, puis en oblique vers l'extérieur.

5. Dispositif de transport conforme à l'une des revendications 1 à 4, caractérisé en ce que la mâchoire de retenue pivotante (15) du porte-cintres (13) forme l'un des bras d'un levier à deux bras, sur l'autre bras (20) duquel est articulée une tige (21) qui peut coulisser longitudinalement sur le porte-vêtements (11) dans le sens opposé à une force élastique et dont l'extrémité libre comporte un galet de commande (29).

6. Dispositif de transport conforme à l'une des revendications 1 à 5, caractérisé en ce qu'à la station de réception des cintres (A), au-dessus des porte-vêtements mobiles (11) est disposé un magasin de cintres (32) dans lequel les cintres (23) sont suspendus par leur crochet (25) de manière connue à une barre oblique (33), et en ce que l'organe de la station de réception des cintres (A) produisant un mouvement de réglage des cintres est un boulon de commande (34) qui se déplace en fonction de la position d'un porte-vêtements (11) et qui est disposé dans le magasin de cintres (32) pour libérer un cintre (23) et le faire tomber librement dans le porte-cintres ouvert (13) du porte-vêtements (11).

7. Dispositif de transport conforme à la revendication 6, caractérisé en ce que le boulon de commande (34) peut être actionné au moyen d'un commutateur (36) qui est disposé dans la piste de guidage (31) du galet de roulement (29) des porte-vêtements (11) et qui est sollicité par celle-ci.

8. Dispositif de transport conforme à l'une des revendications 1 à 7, caractérisé en ce que les organes de la station de retrait des cintres (E) qui produisent le mouvement de réglage des cintres et qui sont disposés au-dessus du porte-cintres (13) des porte-vêtements (11) sont déplacés plus rapidement que les porte-vêtements (11) et sont des boulons porteurs (38) s'engageant dans les crochets (25) des cintres (23).

9. Dispositif de transport conforme à la revendication 8, caractérisé en ce que les boulons porteurs (38) sont disposés à intervalles sur une chaîne de transport (39) qui s'étend, sur un court trajet, parallèlement à la chaîne de transport (10) des porte-vêtements (11) et s'en éloigne ensuite en oblique vers le haut, de façon que les boulons porteurs (38) s'engageant dans le crochet (25) enlèvent les cintres (23) avec le vêtement (37) des porte-vêtements (11) tout en ouvrant le porte-cintres (13) par le passage du corps de cintre (23) sur la surface inclinée (27) de la mâchoire de retenue mobile (15).

*Fig.1*

**Fig.2**

A

**Fig.3**

Fig.4

Fig.5

Fig.6

Fig. 7